# EUROPEAN PATENT APPLICATION

(11) **EP 4 224 570 A1**
(43) Date of publication of application: **09.08.2023**
(21) Application number: 21875131.1
(22) Date of filing: 09.09.2021
(51) Int. Cl.: H01M 4/14, H01M 4/68, H01M 10/12, H01M 10/18, H01M 50/541

(54) **BIPOLAR STORAGE BATTERY**

(30) Priority: 30.09.2020 JP 2020165686; 10.12.2020 JP 2020204824
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA, Hiroki, Tokyo 100-8322 (JP); NAKAJIMA, Yasuo, Tokyo 100-8322 (JP); SUYAMA, Kenichi, Tokyo 100-8322 (JP); TANAKA, Akira, Tokyo 100-8322 (JP); KOIDE, Ayano, Jyoban-shimofunao-machi, Iwaki-shi, Fukushima 972- 8501 (JP); TAIRA, Yoshinobu, Jyoban-shimofunao-machi, Iwaki-shi, Fukushima 972- 8501 (JP); HIROTA, Kenji, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/033197
(87) International publication number: WO 2022/070829

(57) **Abstract**

Provided is a bipolar storage battery in which, even when growth occurs in a positive electrode due to corrosion caused by sulfuric acid contained in an electrolytic solution, the electrolytic solution is hard to penetrate into an interface between the positive electrode and an adhesive and battery performance is hard to decrease. The bipolar storage battery is a bipolar storage battery (1) including a bipolar electrode (130) including a positive electrode (120), a negative electrode (110), and a bipolar plate (111) in which the positive electrode (120) is provided on one surface and the negative electrode (110) is provided on the other surface, and the bipolar electrode (130) includes a covering member (150) configured to cover a peripheral part (120a) of an opposite surface of the positive electrode (120) in close contact with the peripheral part (120a), the opposite surface being opposite to a surface, of the positive electrode (120a), bonded to the bipolar plate (111).

## Description

### Technical Field

An embodiment of the present invention relates to a bipolar storage battery.

### Background Art

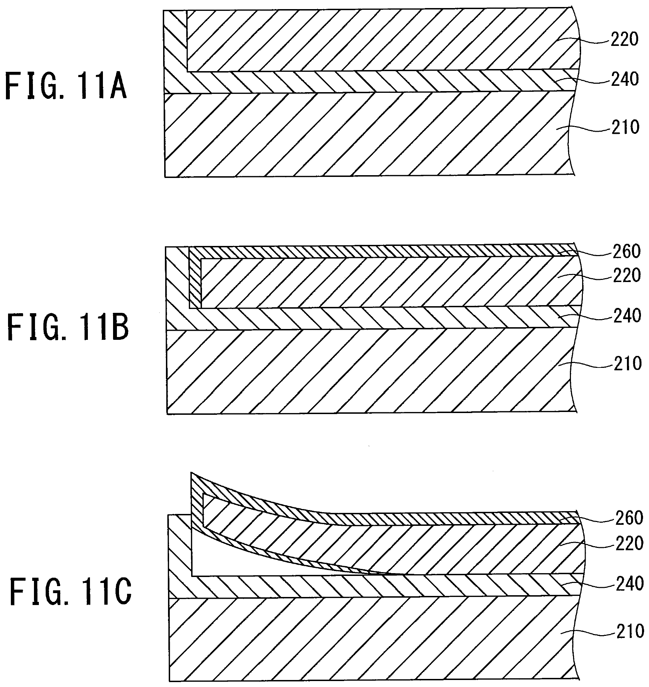

A bipolar lead storage battery includes a bipolar electrode including a positive electrode, a negative electrode, and a substrate (a bipolar plate) in which the positive electrode is provided on one surface and the negative electrode is provided on the other surface. As illustrated in FIG. 11A, a positive electrode of a conventional bipolar electrode is configured such that a positive-electrode lead layer 220 is disposed on one surface of a substrate 210 made of resin via an adhesive layer 240, and a positive active material (PAM) layer (not illustrated) is disposed on the positive-electrode lead layer 220.

### Citation List

### Patent Literature

PTL 1: WO 2013/073420

### Summary of Invention

### Technical Problem

In the bipolar lead storage battery as described above, the positive-electrode lead layer 220 might corrode due to sulfuric acid contained in an electrolytic solution, and a coating 260 of a corrosion product (lead oxide) might be generated on the surface of the positive-electrode lead layer 220 (see FIG. 11B). Due to the growth of the coating 260 of the corrosion product, elongation (growth) might be caused in the positive-electrode lead layer 220.

Further, when the positive-electrode lead layer 220 is separated from the adhesive layer 240 due to the growth, the electrolytic solution penetrates into an interface between the positive-electrode lead layer 220 and the adhesive layer 240, and this might result in that the corrosion of the positive-electrode lead layer 220 due to sulfuric acid further progresses (see FIG. 11C). As a result, when the corrosion reaches a back surface (a surface facing the substrate 210) of the positive-electrode lead layer 220, for example, battery performance might decrease due to the occurrence of a short circuit or the like.

Note that, here, a surface where the corrosion of the positive-electrode lead layer 220 (the positive electrode) due to sulfuric acid progresses because the electrolytic solution penetrates into the interface between the positive-electrode lead layer 220 (the positive electrode) and the adhesive layer 240 due to the growth is hereinafter referred to as a "creepage surface" as appropriate. Further, a distance by which the corrosion progresses is referred to as a "creepage distance" as appropriate.

An object of the present invention is to provide a bipolar storage battery in which, even when growth occurs in a positive electrode due to corrosion caused by sulfuric acid contained in an electrolytic solution, the electrolytic solution is hard to penetrate into an interface between the positive electrode and an adhesive and battery performance is hard to decrease.

### Solution to Problem

A bipolar storage battery according to one aspect of the present invention is a bipolar storage battery including a bipolar electrode including a positive electrode, a negative electrode, and a bipolar plate in which the positive electrode is provided on one surface and the negative electrode is provided on the other surface, and the bipolar electrode includes a covering member configured to cover a peripheral part of an opposite surface of the positive electrode in close contact with the peripheral part, the opposite surface being opposite to a surface, of the positive electrode, bonded to the bipolar plate.

### Advantageous Effects of Invention

In the present invention, a bipolar storage battery includes a bipolar electrode including a positive electrode, a negative electrode, and a bipolar plate in which the positive electrode is provided on one surface and the negative electrode is provided on the other surface, and the bipolar electrode includes a covering member configured to cover a peripheral part of an opposite surface of the positive electrode in close contact with the peripheral part, the opposite surface being opposite to a surface, of the positive electrode, bonded to the bipolar plate. By employing such a configuration, it is possible to secure a contact range between a positive-electrode lead layer and a positive active material layer and to prevent penetration of the electrolytic solution as much as possible. Accordingly, even when growth occurs in the positive electrode due to corrosion caused by sulfuric acid contained in the electrolytic solution, the electrolytic solution is hard to penetrate into an interface between the positive electrode and an adhesive, and battery performance is hard to decrease.

### Brief Description of Drawings

FIG. 1 is a sectional view to describe a structure of a bipolar lead storage battery according to an embodiment of the present invention;
FIG. 2 is an enlarged sectional view of a bipolar electrode and illustrates a structure of an essential part of a bipolar lead storage battery according to a first embodiment of the present invention;
FIG. 3 is a view to describe, in terms of the bipolar lead storage battery according to the first embodiment of the present invention, a state where penetration of an electrolytic solution into an interface between a positive electrode and an adhesive is restrained even when growth occurs in the positive electrode due to corrosion caused by sulfuric acid contained in the electrolytic solution;
FIG. 4 is a plan view of the bipolar electrode to describe a structure of an essential part of the bipolar lead storage battery according to the first embodiment of the present invention;
FIG. 5 is an enlarged sectional view of the bipolar electrode and illustrates a structure of an essential part of a modification of the bipolar lead storage battery according to the first embodiment of the present invention;
FIG. 6 is an enlarged sectional view of a bipolar electrode and illustrates a structure of an essential part of a second embodiment of the bipolar lead storage battery according to the present invention;
FIG. 7 is an enlarged sectional view of a bipolar electrode and illustrates a structure of an essential part of a third embodiment of the bipolar lead storage battery according to the present invention;
FIG. 8 is an enlarged sectional view of a bipolar electrode and illustrates a structure of an essential part of a fourth embodiment of the bipolar lead storage battery according to the present invention;
FIG. 9 is an enlarged sectional view of a bipolar electrode and illustrates a structure of an essential part of a fifth embodiment of the bipolar lead storage battery according to the present invention;
FIG. 10 is an enlarged sectional view of a bipolar electrode and illustrates a structure of an essential part of a sixth embodiment of the bipolar lead storage battery according to the present invention; and
FIG. 11A, 11B and 11C are view to describe, in terms of a conventional bipolar lead storage battery, a state where an electrolytic solution penetrates into an interface between a positive-electrode lead layer and an adhesive as a result of the occurrence of growth in the positive-electrode lead layer due to corrosion caused by sulfuric acid contained in the electrolytic solution.

### Description of Embodiments

The following describes embodiments of the present invention in detail with reference to the drawings. Note that the embodiments to be described below describe examples of the present invention. Further, various changes or improvements can be added to the present embodiments, and the embodiments with the changes or improvements can be also included in the present invention. The embodiments and their modifications are included in the scope and the gist of the invention and are also included in the invention described in the claims and in its equivalent range. Note that the following description deals with a lead storage battery as an example from among various storage batteries.

### (First Embodiment)

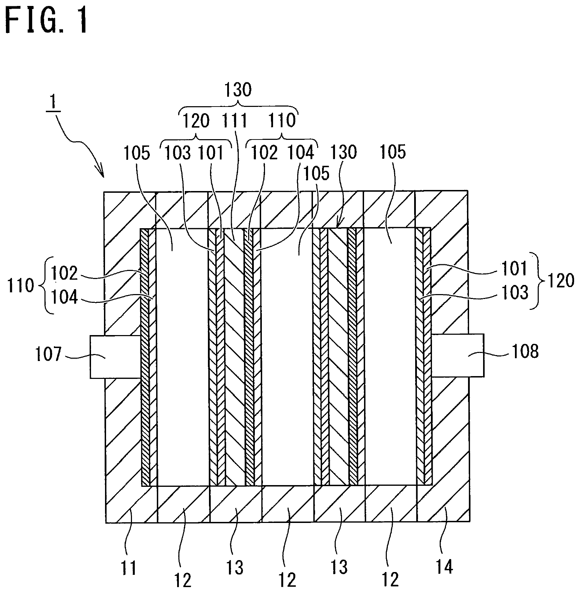

A structure of a bipolar lead storage battery 1 according to an embodiment of the present invention will be described with reference to FIG. 1. FIG. 1 is a sectional view to describe the structure of the bipolar lead storage battery 1 according to the embodiment of the present invention.

The bipolar lead storage battery 1 illustrated in FIG. 1 includes: a first plate unit in which a negative electrode 110 is fixed to a first plate (an end plate) 11 having a flat plate shape; second plate units in each of which an electrolytic layer 105 is fixed to the inside of a second plate (a spacer) 12 having a frame plate shape; third plate units in each of which a bipolar electrode 130 is fixed to the inside of a third plate (a rim) 13 having a frame plate shape, the bipolar electrode 130 being configured such that a positive electrode 120 is provided on one surface of a substrate (a bipolar plate) 111 and a negative electrode 110 is provided on the other surface; and a fourth plate unit in which the positive electrode 120 is fixed to a fourth plate (an end plate) 14 having a flat plate shape.

When the second plate units and the third plate units are alternately provided in a laminated manner between the first plate unit and the fourth plate unit, the bipolar lead storage battery 1 having a generally rectangular solid shape is formed, for example. The number of the second plate units to be provided and the number of the third plate units to be provided are set such that a power storage capacity of the bipolar lead storage battery 1 achieves a desired value.

A negative electrode terminal 107 is fixed to the first plate 11, and the negative electrode 110 fixed to the first plate 11 is electrically connected to the negative electrode terminal 107. A positive electrode terminal 108 is fixed to the fourth plate 14, and the positive electrode 120 fixed to the fourth plate 14 is electrically connected to the positive electrode terminal 108.

The first plate 11 to the fourth plate 14 are formed of well-known molding resin, for example. The first plate 11 to the fourth plate 14 are fixed to each other such that an inner part is sealed by an appropriate method to prevent an electrolytic solution from flowing outside.

The electrolytic layer 105 is constituted by a glass-fiber mat impregnated with an electrolytic solution containing sulfuric acid, for example.

The bipolar plate 111 is made of thermoplastic resin, for example. Examples of the thermoplastic resin to form the bipolar plate 111 include an acrylonitrile-butadiene-styrene copolymer (ABS resin) and polypropylene, for example. These thermoplastic resins are excellent in moldability and also excellent in sulfuric-acid resistance. Accordingly, even when the electrolytic solution makes contact with the bipolar plate 111, the bipolar plate 111 is hard to decompose, deteriorate, or corrode.

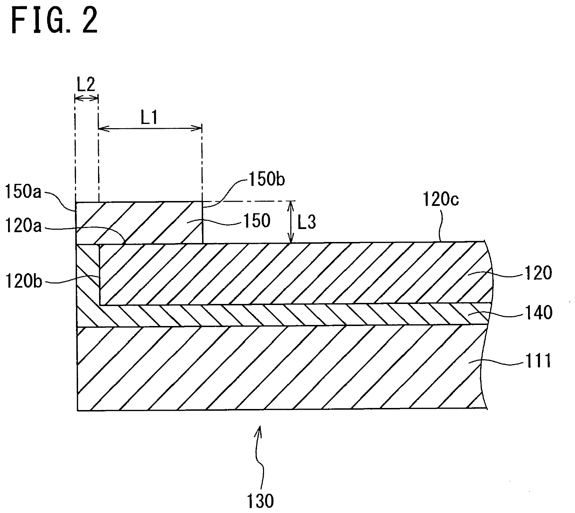

The positive electrode 120 includes a positive-electrode lead layer 101 as a positive-electrode current collector, the positive-electrode lead layer 101 being made of lead or lead alloy and disposed on the one surface of the bipolar plate 111, and a positive active material layer 103 disposed on the positive-electrode lead layer 101. The positive-electrode lead layer 101 is bonded to the one surface of the bipolar plate 111 via an adhesive 140 provided between the one surface of the bipolar plate 111 and the positive-electrode lead layer 101. Accordingly, on the one surface (a surface facing upward on the plane of paper in the figures such as FIG. 2 to be described later) of the bipolar plate 111, the adhesive 140, the positive-electrode lead layer 101, and the positive active material layer 103 are provided in a laminated manner in this order.

The negative electrode 110 includes a negative-electrode lead layer 102 as a negative-electrode current collector, the negative-electrode lead layer 102 being made of lead or lead alloy and disposed on the other surface of the bipolar plate 111, and a negative active material (NAM) layer 104 disposed on the negative-electrode lead layer 102. The negative-electrode lead layer 102 is bonded to the other surface of the bipolar plate 111 via the adhesive 140 provided between the other surface of the bipolar plate 111 and the negative-electrode lead layer 102. The positive electrode 120 is electrically connected to the negative electrode 110 by an appropriate method.

In the bipolar lead storage battery 1 according to the first embodiment with such a configuration, the bipolar electrode 130 is constituted by the bipolar plate 111, the positive-electrode lead layer 101, the positive active material layer 103, the negative-electrode lead layer 102, and the negative active material layer 104, as described above. A bipolar electrode is an electrode having functions both as a positive electrode and a negative electrode in a single electrode. The bipolar lead storage battery 1 according to the embodiment of the present invention has a battery configuration in which cell members are connected in series to each other by assembling the cell members such that the cell members are provided alternately in a laminated manner, the cell members being each configured such that the electrolytic layer 105 is provided between the positive electrode 120 and the negative electrode 110.

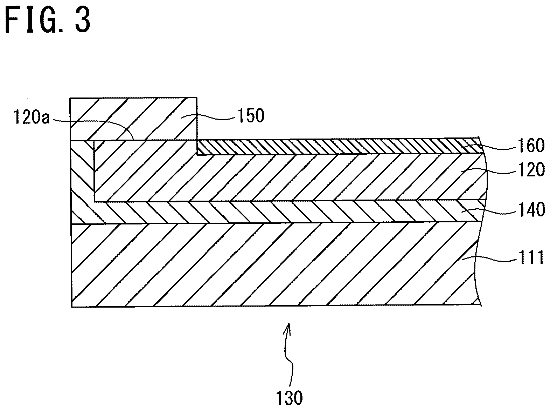

Further, the bipolar lead storage battery 1 according to the first embodiment has a structure in which penetration of the electrolytic solution into an interface between the positive-electrode lead layer 101 and the adhesive 140 is restrained even when growth occurs in the positive-electrode lead layer 101 due to corrosion caused by sulfuric acid contained in the electrolytic solution. The following describes details of the structure in which the penetration of the electrolytic solution is restrained, with reference to FIGS. 2, 3.

FIG. 2 is an enlarged sectional view of the bipolar electrode 130 and illustrates a structure of an essential part of the bipolar lead storage battery 1 according to the first embodiment. Further, FIG. 3 is a view to describe, in terms of the bipolar lead storage battery 1 according to the first embodiment, a state where the penetration of the electrolytic solution into the interface between the positive electrode 120 and the adhesive 140 is restrained even when growth occurs in the positive electrode 120 due to corrosion caused by sulfuric acid contained in the electrolytic solution.

Note that, in the sectional views of the bipolar electrode 130, including FIG. 2 and described below, the positive-electrode lead layer 101 and the positive active material layer 103 are collectively considered as the positive electrode 120. In the embodiment of the present invention, a covering member 150 is provided to cover a peripheral part of the positive-electrode lead layer 101, the peripheral part being exposed in a peripheral part of the positive active material layer 103, when the covering member 150 is provided in a laminated manner, but the covering member 150 should be provided to cover at least the peripheral part of the positive-electrode lead layer 101 as such.

Accordingly, in the bipolar lead storage battery 100 according to the embodiment of the present invention, the covering member 150 may be provided to cover the peripheral part of the positive electrode 120, and, for example, the covering member 150 can be also provided to cover the peripheral part of the positive active material layer 103. Further, the negative electrode 110 formed on the other surface of the bipolar plate 111 is not illustrated.

The bipolar electrode 130 illustrated in FIG. 2 is configured such that the bipolar plate 111, the adhesive 140, the positive electrode 120, and the covering member 150 are sequentially provided in a laminated manner. The bipolar plate 111 extends horizontally on the figure, and a right side part of the bipolar plate 111 is not illustrated.

In the bipolar electrode 130 illustrated in FIG. 2, the positive electrode 120 is bonded, via the adhesive 140, onto a part constituting the one surface of the bipolar plate 111 and extending horizontally. Further, the adhesive 140 is also provided in a part surrounding a peripheral edge part 120b of a peripheral part 120a of the positive electrode 120 and extending in a vertical direction of the bipolar plate 111, as well as between the one surface of the bipolar plate 111 and a surface, of the positive electrode 120, facing the one surface of the bipolar plate 111.

Further, in the bipolar lead storage battery 1 according to the first embodiment, the covering member 150 is provided such that the covering member 150 covers the peripheral part 120a in close contact with the peripheral part 120a on a surface (hereinafter, this surface is referred to as an "opposite surface 120c" appropriately) of the positive electrode 120, the surface being opposite from a surface, of the positive electrode 120, bonded to the bipolar plate 111.

One end part 150a side of a surface, of the covering member 150, facing the peripheral part 120a makes contact with the adhesive 140 provided in an extending manner in the vertical direction from the bipolar plate 111. That is, the covering member 150 is provided to cover the peripheral part 120a of the positive electrode 120.

At this time, it is more preferable that the covering member 150 be disposed to press against the positive electrode 120. Since the covering member 150 makes close contact with the peripheral part 120a of the positive electrode 120, even when a coating 160 of a corrosion product (lead oxide) is generated on the surface of the positive electrode 120 as illustrated in FIG. 3, growth of the coating 160 of the corrosion product is restrained by the covering member 150, and hereby, the coating 160 of the corrosion product is restrained from growing to the peripheral part 120a.

Accordingly, even when the growth occurs in the positive electrode 120 due to corrosion caused by sulfuric acid contained in the electrolytic solution, the positive electrode 120 is hard to be separated from the adhesive 140, and hereby, the electrolytic solution is restrained from penetrating into the interface between the positive electrode 120 and the adhesive 140. Therefore, such a defect that battery performance decreases due to the occurrence of a short circuit or the like is hard to occur, the short circuit being caused when the corrosion caused by sulfuric acid reaches a back surface (a surface of the positive electrode 120, the surface facing the bipolar plate 111) of the positive electrode 120.

Here, the peripheral part 120a of the positive electrode 120 is an outer part of the opposite surface 120c. Accordingly, when the positive electrode 120 is regarded as a plane, the peripheral part 120a has a frame shape surrounding four sides of the positive electrode 120.

As for the covering member 150, when the covering member 150 covers even just part of the peripheral part 120a having a frame shape, the aforementioned effect is yielded. However, it is more preferable that the covering member 150 cover the entire of the peripheral part 120a having a frame shape, and this further successfully yields the aforementioned effect and makes it extremely hard to decrease the battery performance.

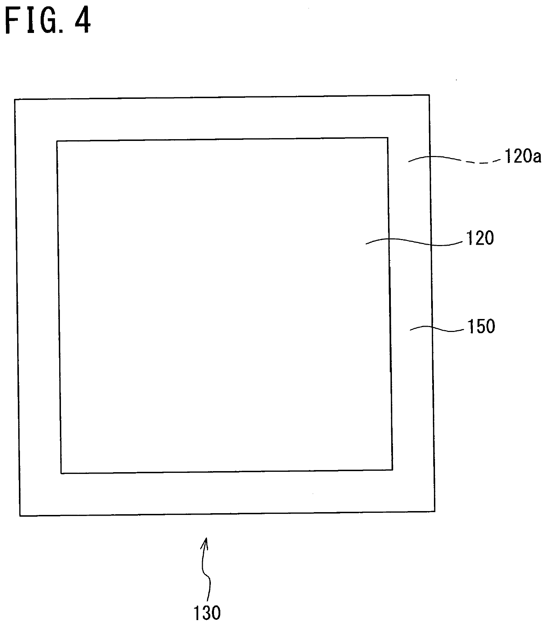

FIG. 4 is a plan view of the bipolar electrode 130 to describe the structure of the essential part of the bipolar lead storage battery 1 according to the first embodiment. As illustrated in FIG. 4, it is more preferable that the covering member 150 have a frame shape that covers the peripheral part 120a of the positive electrode 120.

Here, the covering member 150 should have sulfuric-acid resistance by which the covering member 150 is hard to be corroded by sulfuric acid, and examples of a material for the covering member 150 include resin, metal (e.g., stainless steel), and ceramic having sulfuric-acid resistance, for example.

Further, in a case where the resin is selected as the material for the covering member 150, an acrylonitrile-butadiene-styrene copolymer (ABS resin), polypropylene, or the like can be used, for example. These thermoplastic resins are excellent in moldability and also excellent in sulfuric-acid resistance. Accordingly, even when the electrolytic solution makes contact with the covering member 150, the covering member 150 is hard to decompose, deteriorate, or corrode.

A region, of the positive electrode 120, making contact with the covering member 150 is a region including the peripheral part 120a and having a preset distance from the peripheral edge part 120b. More specifically, as illustrated in FIG. 2, a region, provided on the opposite surface 120c, where the covering member 150 makes close contact with the positive electrode 120 is at least a region indicated by a distance L1 from the peripheral edge part 120b of the positive electrode 120 to the other end part 150b of the covering member 150 on the opposite surface 120c. The distance L1 is 4.6 mm or more. Further, it is more desirable that the distance L1 be less than 10 mm.

That is, in consideration of the necessity of setting a large contact range between the positive-electrode lead layer 101 and the positive material layer 103 constituting the positive electrode 120, it is necessary to set the distance L1 as short as possible, but when the distance L1 is too short, the penetration of the electrolytic solution is allowed, and the creepage distance is elongated. In view of this, the distance L1 is set to the range equal to or more than 4.6 mm but less than 10 mm.

Note that, in a case of the bipolar electrode 130 illustrated in FIG. 2, the adhesive 140 is provided in a region indicated by a distance L2 between the positive electrode 120 and a part extending in the vertical direction from the bipolar plate 111, and the covering member 150 also makes close contact with the adhesive 140 provided in this region. Note that a distance necessary to prevent the penetration of sulfuric acid is the distance L1 in relation to the creepage distance, and the distance L2 can be set optionally.

Further, as for the covering member 150, a distance L3 indicative of the thickness of the covering member 150 is formed to be equal to or more than 0.5 mm but equal to or less than 8.0 mm. Here, the reason why the thickness of the covering member 150 is set to such a range is as follows: in a case where the thickness of the covering member 150 is smaller than 0.5 mm, when the electrolytic solution penetrates into an interface between the opposite surface 120c of the positive electrode 120 and the covering member 150, there is a possibility that the covering member 150 rises. In the meantime, it is also conceivable that, when the thickness of the covering member 150 is thicker than 8.0 mm, this might affect a structure around the bipolar electrode 130.

By providing the covering member 150 in the region including the peripheral part 120a of the positive electrode 120 as such, even when the growth occurs, it is possible to prevent such a situation that the positive electrode 120 is separated from the covering member 150 by the electrolytic solution penetrating into the interface between the positive electrode 120 and the covering member 150.

Further, as a distance where the covering member 150 is provided, the distance L1 from the peripheral edge part 120b of the positive electrode 120 to the other end part 150b of the covering member 150 on the opposite surface 120c is set to be equal to or more than 4.6 mm but less than 10 mm. With this configuration, the electrolytic solution is hard to penetrate into the interface between the positive electrode 120 and the covering member 150, and hereby, the creepage distance is surely shortened, so that it is possible to provide the bipolar lead storage battery 1 in which battery performance is hard to decrease.

Note that the distance of each part described with reference to FIG. 2 is also applied to the bipolar lead storage battery 1 in each embodiment to be described below.

Further, since the covering member 150 has a predetermined thickness, even when the growth occurs in the positive electrode 120 due to corrosion caused by sulfuric acid contained in the electrolytic solution, the covering member 150 is not stripped off, and hereby, the electrolytic solution is further restrained from penetrating into the interface between the positive electrode 120 and the covering member 150.

### (Modification of First Embodiment)

In the bipolar lead storage battery 1 according to the first embodiment as described so far, the covering member 150 is disposed directly on the peripheral part 120a of the positive electrode 120, as illustrated in FIG. 2. However, instead of such a configuration, the adhesive 140 may be provided between the peripheral part 120a and the covering member 150 such that the peripheral part 120a is bonded to the covering member 150 via the adhesive 140.

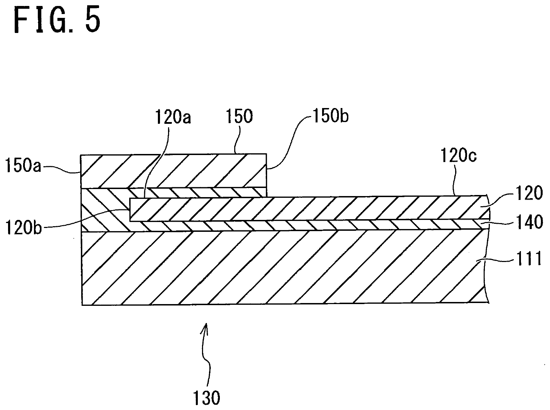

FIG. 5 is an enlarged sectional view of the bipolar electrode 130 and illustrates a structure of an essential part of the modification of the bipolar lead storage battery 1 according to the first embodiment. As illustrated in FIG. 5, the adhesive 140 disposed between the peripheral part 120a and the covering member 150 is integrated with the adhesive 140 provided between the one surface of the bipolar plate 111 and the positive electrode 120.

That is, an end part of the adhesive 140 disposed, on the peripheral edge part 120b side, between the one surface of the bipolar plate 111 and the positive electrode 120 extends to between the peripheral part 120a of the opposite surface 120c and the covering member 150 and bonds the peripheral part 120a to the covering member 150. With such a configuration, the covering member 150 is fixed to the bipolar plate 111 via the adhesive 140.

Note that, instead of such a configuration, the adhesive provided between the peripheral part 120a and the covering member 150 and the adhesive 140 provided between the one surface of the bipolar plate 111 and the positive electrode 120 may not be continuous with each other and may be provided separately.

By employing such a configuration, the covering member 150 more strongly makes close contact with the peripheral part 120a, and the coating 160 of the corrosion product is restrained still more from growing to the peripheral part 120a.

### (Second Embodiment)

Next will be described a second embodiment in the present invention. Note that, in the second embodiment, the same constituent as a constituent described in the first embodiment described above has the same reference sign as a reference sign used in the first embodiment, and a redundant description about the same constituent is omitted.

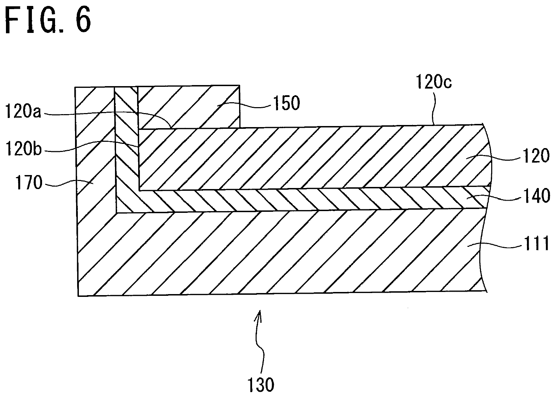

FIG. 6 is an enlarged sectional view of the bipolar electrode 130 and illustrates a structure of an essential part of the second embodiment of the bipolar lead storage battery 1 according to the present invention. In the first embodiment, the bipolar plate 111 has a flat plate shape, but the bipolar plate 111 in the second embodiment has a shape having a frame 170 formed in a flange shape at a peripheral edge part.

That is, as illustrated in FIG. 6, a flange-shaped plate portion extends in a direction perpendicular to the one surface of the bipolar plate 111 from a peripheral edge part of the bipolar plate 111, and the plate portion is the frame 170. Therefore, the frame 170 is disposed to surround the peripheral edge part 120b of the positive electrode 120. Note that the frame 170 is made of the same material as the bipolar plate 111, e.g., resin or the like.

In the bipolar storage battery of the second embodiment, the covering member 150 is fixed to the frame 170. Accordingly, the covering member 150 is easily disposed to press against the positive electrode 120. By disposing the covering member 150 such that the covering member 150 presses against the positive electrode 120, the coating 160 of the corrosion product is restrained still more from growing to the peripheral part 120a.

The covering member 150 can be also fixed to the frame 170 by an adhesive. The adhesive via which the covering member 150 is fixed to the frame 170 and the adhesive 140 via which the bipolar plate 111 is fixed to the positive electrode 120 may be integrated with each other as illustrated in FIG. 6 or may be provided separately.

Note that the frame 170 and the bipolar plate 111 may be an integrated member as illustrated in FIG. 6 or may be separated members. Further, the frame 170 in FIG. 6 illustrates a state where the plate portion extends in a flange shape in the direction perpendicular to the one surface of the bipolar plate 111 from the peripheral edge part of the bipolar plate 111, but the frame 170 may include a state where the plate portion extends in a flange shape in a direction perpendicular to the other surface.

### (Third Embodiment)

Next will be described a third embodiment in the present invention. Note that, in the third embodiment, the same constituent as a constituent described in the first and second embodiments has the same reference sign as a reference sign used in the first and second embodiments described above, and a redundant description about the same constituent is omitted.

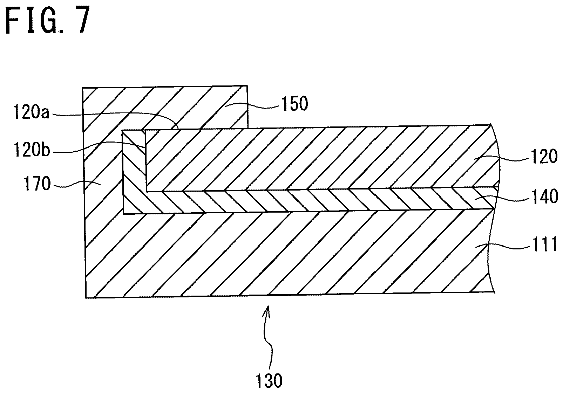

FIG. 7 is an enlarged sectional view of the bipolar electrode 130 and illustrates a structure of an essential part of the third embodiment of the bipolar lead storage battery 1 according to the present invention. In the second embodiment, the covering member 150 and the frame 170 are separated members, but in the third embodiment, the covering member 150 is formed of a member integrated with the frame 170.

Accordingly, the covering member 150 is made of the same material as the frame 170. With such a configuration, the covering member 150 is more easily disposed to press against the positive electrode 120, as described above. Accordingly, by disposing the covering member 150 such that the covering member 150 presses against the positive electrode 120, the coating 160 of the corrosion product is restrained still more from growing to the peripheral part 120a.

### (Fourth Embodiment)

Next will be described a fourth embodiment in the present invention. Note that, in the fourth embodiment, the same constituent as a constituent described in the first to third embodiments described above has the same reference sign as a reference sign used in the first to third embodiments, and a redundant description about the same constituent is omitted.

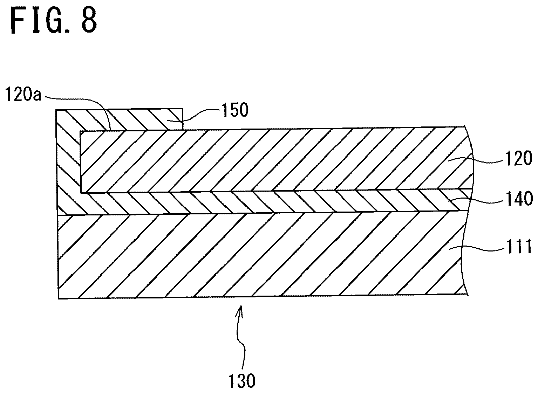

FIG. 8 is an enlarged sectional view of the bipolar electrode 130 and illustrates a structure of an essential part of the fourth embodiment of the bipolar lead storage battery 1 according to the present invention. In the first embodiment, the covering member 150 is formed of resin, metal, or ceramic having sulfuric-acid resistance, but in the fourth embodiment, the covering member 150 is formed of a hardened object of an adhesive.

That is, when the adhesive is applied to the peripheral part 120a and is hardened to be turned into the covering member 150, it is possible to yield an effect similar to that of the covering member 150 formed of resin, metal, or ceramic having sulfuric-acid resistance.

In this case, the adhesive to form the covering member 150 may be integrated with the adhesive 140 via which the bipolar plate 111 is bonded to the positive electrode 120 as illustrated in FIG. 8. Naturally, the adhesive to form the covering member 150 and the adhesive 140 via which the bipolar plate 111 is bonded to the positive electrode 120 may not be continuous with each other and may be provided separately.

By employing such a configuration that the covering member 150 is formed of the adhesive 140, the covering member 150 more strongly makes close contact with the peripheral part 120a, and the coating 160 of the corrosion product is restrained still more from growing to the peripheral part 120a.

### (Fifth Embodiment)

Next will be described a fifth embodiment in the present invention. Note that, in the fifth embodiment, the same constituent as a constituent described in the first to fourth embodiment described above has the same reference sign as a reference sign used in the first to fourth embodiments, and a redundant description about the same constituent is omitted.

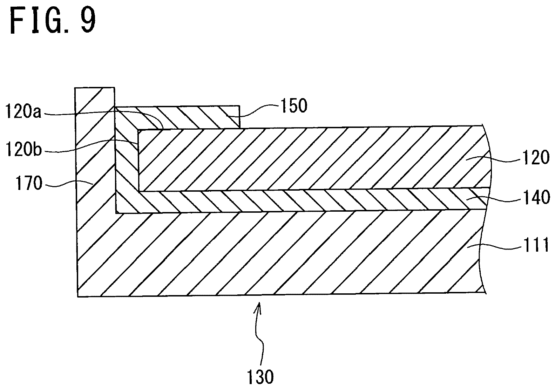

FIG. 9 is an enlarged sectional view of the bipolar electrode 130 and illustrates a structure of an essential part of the fifth embodiment of the bipolar lead storage battery 1 according to the present invention. The covering member 150 in the fifth embodiment is formed of a hardened object of an adhesive, similarly to the fourth embodiment. Further, the bipolar plate 111 including the frame 170 is used.

That is, when the adhesive is applied to the peripheral part 120a and is hardened to be turned into the covering member 150, it is possible to yield an effect similar to that of the covering member 150 formed of resin, metal, or ceramic having sulfuric-acid resistance.

Further, since the bipolar plate 111 includes the frame 170, the adhesive 140 forming the covering member 150 is also fixed to the frame 170. By employing such a configuration, the covering member 150 more strongly makes close contact with the peripheral part 120a, and the coating 160 of the corrosion product is restrained still more from growing to the peripheral part 120a.

### (Sixth Embodiment)

Next will be described a sixth embodiment in the present invention. Note that, in the sixth embodiment, the same constituent as a constituent described in the first to fifth embodiments described above has the same reference sign as a reference sign used in the first to fifth embodiments, and a redundant description about the same constituent is omitted.

The modification of the first embodiment illustrated in FIG. 5 as described above deals with an example in which the adhesive 140 is provided between the covering member 150 and the opposite surface 120c of the positive electrode 120, but the sixth embodiment deals with an example in which the bipolar plate 111 including the frame 170 is used.

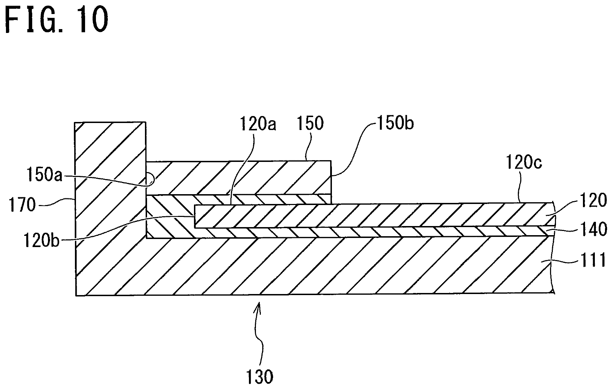

FIG. 10 is an enlarged sectional view of the bipolar electrode 130 and illustrates a structure of an essential part of the sixth embodiment of the bipolar lead storage battery 1 according to the present invention. As illustrated in FIG. 10, the bipolar electrode 130 in the sixth embodiment is configured such that the adhesive 140 is provided between the covering member 150 and the opposite surface 120c of the positive electrode 120, and the one end part 150a of the covering member 150 is fixed to the frame 170.

As such, in the bipolar lead storage battery according to the sixth embodiment, the covering member 150 is provided on the opposite surface 120c of the positive electrode 120 via the adhesive 140 and is fixed to the frame 170. Accordingly, the covering member 150 more strongly makes close contact with the peripheral part 120a, and the covering member 150 is easily disposed to press against the positive electrode 120. Accordingly, the coating 160 of the corrosion product is restrained still more from growing to the peripheral part 120a.

### [Examples]

The bipolar lead storage batteries according to the first to sixth embodiments were subjected to a cycle test in which application and non-application of potential are repeated alternatingly, continuously for four weeks under the environment of 60°. As a result, in any of the bipolar lead storage batteries according to the first to sixth embodiments, corrosion caused by sulfuric acid did not reach the back surface of the positive electrode 120, so that the battery performance did not decrease.

In the meantime, when a bipolar lead storage battery (a comparative example) having a configuration similar to the configuration illustrated in FIG. 11A to 11C was also subjected to a cycle test similar to the examples, corrosion caused by sulfuric acid reached the back surface of the positive-electrode lead layer 220 to cause a short circuit, and the function of the battery was lost.

With the bipolar lead storage battery according to each of the embodiments described above, even when the growth occurs in the positive electrode due to corrosion caused by sulfuric acid contained in the electrolytic solution, the electrolytic solution is hard to penetrate into the interface between the positive electrode and the adhesive, and the battery performance is hard to decrease.

Note that, as the adhesive 140 used in the bipolar lead storage battery 1 according to the first to sixth embodiments, there is, for example, a hardened object of a reaction-curable adhesive configured to cure by a reaction between a base compound containing epoxy resin and a hardening agent containing an amine compound.

That is, the hardened object has such a property that the hardened object is hard to be corroded by sulfuric acid, and sulfuric acid is hard to penetrate into the interface between the positive electrode 120 and the adhesive 140. Further, the hardened object is hard to decompose, deteriorate, or corrode even when the hardened object makes contact with the electrolytic solution.

Accordingly, since the positive electrode 120 strongly makes close contact with the adhesive 140, even when the growth occurs in the positive electrode 120 due to corrosion caused by sulfuric acid contained in the electrolytic solution, the electrolytic solution is restrained from penetrating into the interface between the positive electrode 120 and the adhesive 140. Further, such a defect that the battery performance decreases due to the occurrence of a short circuit or the like is hard to occur, the short circuit being caused when the corrosion caused by sulfuric acid reaches the surface, of the positive electrode 120, facing the bipolar plate 111.

The epoxy resin contained in the base compound may be, for example, at least either of bisphenol A epoxy resin and bisphenol F epoxy resin. As the epoxy resin, one type may be used solely, or two or more types may be used in combination.

The amine compound contained in the hardening agent may be, for example, an aliphatic polyamine compound, an alicyclic polyamine compound, or an aromatic polyamine compound. One of the amine compounds may be used solely, or two or more of the amine compounds may be used in combination.

Concrete examples of the aliphatic polyamine compound include aliphatic primary amine such as triethylenetetramine (C₆H₁₈N₄), aliphatic secondary amine such as triethylenetetramine, and so on. Concrete examples of the alicyclic polyamine compound include alicyclic primary amine such as isophorone diamine (C₁₀H₂₂N₂). Concrete examples of the aromatic polyamine compound include aromatic primary amine such as diaminodiphenylmethane (C₁₃H₁₄N₂).

Note that, as described above, the description in each of the embodiments deals with the positive electrode as an example, but the structure described herein can be also employed for the negative electrode.

Further, as described above, the description in the embodiments of the present invention deals with the bipolar lead storage battery as an example. However, in a case where the above description also applies to other storage batteries using other metals (e.g., aluminum, copper, nickel), alloy, or conductive resin for a current collector instead of lead, naturally, the present invention does not preclude the application.

### Reference Signs List

- 1: bipolar lead storage battery
- 101: positive-electrode lead layer
- 102: negative-electrode lead layer
- 103: positive active material layer
- 104: negative active material layer
- 105: electrolytic layer
- 110: negative electrode
- 111: substrate (bipolar plate)
- 120: positive electrode
- 120a: peripheral part
- 120b: peripheral edge part
- 120c: opposite surface
- 130: bipolar electrode
- 140: adhesive
- 150: covering member
- 150a: one end part
- 150b: the other end part
- 160: coating
- 170: frame

## Claims

1. A bipolar storage battery comprising a bipolar electrode including a positive electrode, a negative electrode, and a bipolar plate in which the positive electrode is provided on one surface and the negative electrode is provided on the other surface, wherein the bipolar electrode includes a covering member configured to cover a peripheral part of an opposite surface of the positive electrode in close contact with the peripheral part, the opposite surface being opposite to a surface, of the positive electrode, bonded to the bipolar plate.

2. The bipolar storage battery according to claim 1, wherein a distance from a peripheral edge part of the peripheral part to an end part of the covering member is equal to or more than 4.6 mm.

3. The bipolar storage battery according to claim 2, wherein a distance from the peripheral edge part to the end part of the covering member is less than 10 mm.

4. The bipolar storage battery according to any one of claims 1 to 3, wherein:
the covering member is disposed on an adhesive provided on the positive electrode; and
an end part of the covering member is disposed to cover a region where the adhesive is provided.

5. The bipolar storage battery according to claim 4, wherein the covering member has a thickness equal to or more than 0.5 mm but equal to or less than 8.0 mm.

6. The bipolar storage battery of any one of claims 1 to 3, wherein the covering member is formed of an adhesive.

7. The bipolar storage battery according to any one of claims 4 to 6, wherein the adhesive is formed of a hardened object of a reaction-curable adhesive configured to cure by a reaction between a base compound containing epoxy resin and a hardening agent containing an amine compound.

8. The bipolar storage battery according to claim 7, wherein the amine compound is at least one of an aliphatic polyamine compound, an alicyclic polyamine compound, and an aromatic polyamine compound.

9. The bipolar storage battery according to any one of claims 1 to 5, wherein the covering member is made of an acrylonitrile-butadiene-styrene copolymer or polypropylene.

10. The bipolar storage battery according to any one of claims 1 to 9, wherein the covering member is fixed to a frame made of resin, the frame being disposed to surround a peripheral edge part of the positive electrode.

11. The bipolar storage battery according to any one of claims 1 to 10, wherein the covering member forms a frame shape covering an entire of the peripheral part.

12. The bipolar storage battery according to any one of claims 1 to 11, wherein:
the positive electrode includes a positive-electrode current collector;
the negative electrode includes a negative-electrode current collector; and
the positive-electrode current collector and the negative-electrode current collector are made of lead or lead alloy.
